# EUROPÄISCHE PATENTANMELDUNG

(11) **EP 1 427 079 A1**
(43) Veröffentlichungstag der Anmeldung: **09.06.2004**
(21) Anmeldenummer: 03090372.8
(22) Anmeldetag: 29.10.2003
(51) Int. Cl.: H02B 11/12

(54) **Anordnung mit einem Einschubrahmen und einem in den Einschubrahmen schiebbaren Einschub-Leistungsschalter**

(30) Priorität: 03.12.2002 DE 10257174
(71) Anmelder: SIEMENS AKTIENGESELLSCHAFT, 80333 München (DE)
(72) Erfinder: Schmidt, Detlev, 12055 Berlin (DE); Seidler, Günter, 13359 Berlin (DE); Thiede, Ingo, 12159 Berlin (DE); Türkmen, Sezai, 13629 Berlin (DE)

(57) **Zusammenfassung**

Die Erfindung bezieht sich auf eine Anordnung mit einem Einschubrahmen (2; 56) und einem in den Einschubrahmen schiebbaren Einschub-Leistungsschalter (1; 58) bei der zumindest ein Schaltpol mit zumindest einer aus einem feststehenden (7; 65) und einem beweglichen (8; 79) Kontakt bestehenden Schaltkontaktanordnung vorgesehen ist.

Um den zur Unterbringung einer derartigen Anordnung in einer Schaltzelle eines Schaltschrankes oder einer Schaltanlage erforderlichen Bauraum zu verringern ist vorgesehen, dass der feststehende Kontakt (7; 65) ortsfest zu dem Einschubrahmen (2; 56) fixiert ist. - Dabei kann der feststehende Kontakt an einer ersten Anschlussschiene (11; 77) gehalten sein, die eine erste Wand (12; 55) des Einschubrahmens durchgreift.

## Beschreibung

Die Erfindung liegt auf dem Gebiet der Schaltanordnungen für die Abgabe oder Verteilung elektrischer Energie und ist bei der konstruktiven Gestaltung einer Anordnung mit einem Einschubrahmen und einem in den Einschubrahmen schiebbaren Einschub-Leistungsschalter anzuwenden, bei der zumindest eine aus einem feststehenden und einem beweglichen Schaltkontakt bestehende Schaltkontaktanordnung vorgesehen ist.

Eine derartige Anordnung ist beispielsweise aus der US-Patentschrift 4,743,715 bekannt. - Bei dieser bekannten Anordnung ist der feststehende Schaltkontakt jedes Schaltpoles des Einschub-Leistungsschalters an einem oberen, schienenartigen ersten Anschlusssstück des Einschub-Leistungsschalters fixiert. Der bewegliche Schaltkontakt ist über flexible Strombänder mit einem unteren, schienenartigen zweiten Anschlussstück des Einschub-Leistungsschalters verbunden. Eine Rückwand des Einschubrahmens ist von einer oberen ersten Anschlussschiene und einer unteren zweiten Anschlussschiene durchgriffen. Um beim Einschieben des elektrischen Schalters jeweils eine stromtragende Verbindung des oberen Anschlussstückes mit der oberen Anschlussschiene und des unteren Anschlussstückes mit der unteren Anschlussschiene herzustellen sind Trennkontaktanordnungen vorgesehen, die von den Anschlussstücken zugewandten Enden der Anschlussschienen getragen werden. Beim Einschieben des Einschub-Leistungsschalters in den Einschubrahmen gleiten daher die den Trennkontaktanordnungen zugewandten Enden der Anschlussstücke des Einschub-Leistungsschalters zwischen Kontaktlamellen der Trennkontaktanordnungen. Zur Unterbringung dieser Anordnung in einer Schaltzelle eines Schaltschrankes oder einer Schaltanlage ist eine im Verhältnis zu den Abmaßen des Einschub-Leistungsschalters großer Bauraum insbesondere in Verschiebungsrichtung des Einschub-Leistungsschalters erforderlich. Bei dieser Anordnung besteht ein Schaltkammern bildendes Gehäuse aus einer Gehäusevorderwand und einer Gehäuserückwand, die beide als Teil des Einschub-Leistungsschalters ausgebildet sind und von denen die dem Einschubrahmen zugewandte Gehäuserückwand von den beiden Anschlussstücken des Einschub-Leistungsschalters durchgriffen ist. Da an der Gehäusevorderwand die beweglichen Schaltkontakte und an der Gehäuserückwand die feststehenden Schaltkontakte der Schaltpole abgestützt sind, unterliegen die beiden Wände an ihrer Teilungsfuge starken auseinandertreibenden Kräften, die von entsprechend stark ausgebildeten Befestigungsmitteln kompensiert werden müssen. Die Demontage und Montage des Gehäuses - beispielsweise zu Wartungszwecken der Schaltkontaktanordnungen - ist entsprechend aufwendig.

Der Erfindung liegt hiervon ausgehen die Aufgabe zugrunde, die Anordnung derart zu gestalten, dass zu ihrer Unterbringung beispielsweise in einer Schaltzelle eines Schaltschrankes oder einer Schaltanlage wesentlich weniger Bauraum erforderlich ist.

Gemäß der Erfindung wird diese Aufgabe dadurch gelöst, dass der feststehende Schaltkontakt stets ortsfest zu dem Einschubrahmen fixiert ist.

Durch diese Ausgestaltung ist eine obere, einen störenden thermischen Engpass bildende Trennkontaktanordnung nicht mehr erforderlich. Die neue Anordnung weist daher gegenüber der bekannten Anordnung (US-Patentschrift 4,743,715) ein verbessertes Derating-Verhalten, d.h. eine verbesserte Strombelastbarkeit in Abhängigkeit von der Umgebungstemperatur auf. Somit dürfen bei der neuen Anordnung beispielsweise höhere Ströme fließen, ohne dass eine obere vorgegebene Grenztemperatur überschritten wird.

Eine konstruktiv einfache Ausgestaltung der neuen Anordnung sieht vor, dass der feststehende Schaltkontakt an einer ersten Anschlussschiene gehalten ist, die eine erste Wand des Einschubrahmens durchgreift. - Hierbei kann die ortsfeste Fixierung des feststehenden Schaltkontaktes zu dem Einschubrahmen mittels zumindest einer Anschlagfläche erfolgen, die an dem feststehenden Schaltkontakt oder an der ersten Anschlussschiene ausgebildet und die über Befestigungsmittel an der ersten Wand des Einschubrahmens befestigt sein kann.

Eine weitere bevorzugte Ausgestaltung der neuen Anordnung sieht vor, dass eine die erste Wand des Einschubrahmens durchgreifende zweite Anschlussschiene mittels einer Trennkontaktanordnung mit dem beweglichen Schaltkontakt stromtragend verbunden ist, wobei sich die Trennkontaktanordnung und der feststehende Schaltkontakt im wesentlichen im gleichen Abstand von der ersten Wand erstrecken.

Bei der neuen Anordnung kann ein Schaltkammern bildendes Gehäuse vorgesehen sein, wobei jede der Schaltkammern zur Aufnahme jeweils eines Schaltpoles dient. - Dieses Gehäuse kann mit Vorteil dazu dienen, die Schaltkontaktanordnungen der Schaltpole abzustützen und somit die bei Schaltbewegungen wirkenden Kräfte aufzunehmen.

Vorteilhaft ist weiterhin, wenn jeweils ein zur Bildung einer der Schaltkammern dienender erster Wandabschnitt des Gehäuses von der ersten Wand des Einschubrahmens gebildet ist. - Hierdurch kann zum einen der erforderliche Bauraum zur Unterbringung der Anordnung um die Dicke der sonst üblichen, als Teil des Einschub-Leistungsschalters ausgebildeten Gehäuserückwand weiter reduziert werden und zum anderen ist der Zugang zu den Schaltkontaktanordnungen beispielsweise zum Zwecke der Wartung oder der Reparatur der Schaltkontaktanordnungen wesentlich erleichtert, da lediglich ein auch sonst notwendiges Herausschieben des elektrischen Einschub-Leistungsschalters aus dem Einschubrahmen, nicht jedoch eine aufwendige Demontage einer Gehäuserückwand erforderlich ist.

Es kann auch vorgesehen sein, dass jeweils ein zur Bildung einer der Schaltkammern dienender zweiter Wandabschnitt des Gehäuses von einer Gehäuseschale oder einer Abdeckung des Einschub-Leistungsschalters gebildet ist, wobei der zweite Wandabschnitt in eingeschobenem Zustand des Einschub-Leistungsschalters an den ersten Wandabschnitt angrenzt und mit zumindest einer dem ersten Wandabschnitt gegenüberliegenden Öffnung versehen ist, die von dem feststehenden Schaltkontakt der zumindest einen Schaltkontaktanordnung des Schaltpoles durchsetzbar ist. - Bei einer derartigen Ausgestaltung können insbesondere feststehende Schaltkontakte, die Lichtbogenhörner aufweisen, leicht in der zugeordneten Schaltkammer positioniert werden, ohne dass die Gefahr des Austrittes ionisierter Gase aus der Schaltkammer besteht. Die konstruktive Ausgestaltung des Einschubrahmens bleibt dabei unabhängig von der gewählten Unterteilung des Gehäuses in Schaltkammern. Da die Gehäuseschale bzw. die Abdeckung nicht zum Abstützen der feststehenden Schaltkontakte dient, kann sie dünnwandig und damit platz- und materialsparend ausgebildet sein. Bisher bei konventionellen Einschub-Leistungsschaltern vorgesehene, dem Einschubrahmen zugewandte Gehäuserückwände können durch einfache Maßnahmen zum Einsatz in der neuen Anordnung umgestaltet werden. Hierzu kann die bisher übliche Gehäuserückwand beispielsweise mit einer der ersten Wand des Einschubrahmens zugewandten Öffnung und mit einem die Öffnung umschließenden, hohlkörperartigen Schild versehen werden.

Vorteilhaft ist eine Ausgestaltung der neuen Anordnung, bei der ein die Öffnung begrenzender Rand Führungsflächen für den feststehenden Schaltkontakt aufweist, da dieser hierdurch in einer gegenüber dem beweglichen Schaltkontakt vorgegebene Position in der Schaltkammer positioniert werden kann.

Um den Austritt ionisierter Gase aus den Schaltkammern sicher zu verhindern ist in einer bevorzugten Ausgestaltung der neuen Anordnung vorgesehen, dass zwischen den aneinander grenzenden Wandabschnitten einer Schaltkammer ein die zumindest eine Öffnung umlaufendes Labyrinth zum Abdichten der Schaltkammer gebildet ist.

Zwei Ausführungsformen der neuen Anordnung sind in den Figuren 1 bis 4 bzw. 5 bis 10 dargestellt. Dabei zeigen:
Figur 1 und 3 bzw. Figur 5 die erste bzw. zweite Ausführungsform der Anordnung jeweils mit einem Einschubrahmen und einem Einschub-Leistungsschalter in einer ersten Stellung, bei der der Einschub-Leistungsschalter vollständig aus dem Einschubrahmen herausgezogen ist,
Figuren 2 und 4 bzw. Figur 6 die erste bzw. zweite Ausführungsform der Anordnung in einer zweiten Stellung, bei der der Einschub-Leistungsschalter vollständig in den Einschubrahmen eingeschobenen ist,
Figur 7 einen vergrößerten Ausschnitt aus Figur 6,
Figur 8 einen Teil der Anordnung gemäß der Figur 6, mit einer Abdeckung und
Figur 9 und 10 zwei Ausführungsformen der Abdeckung.

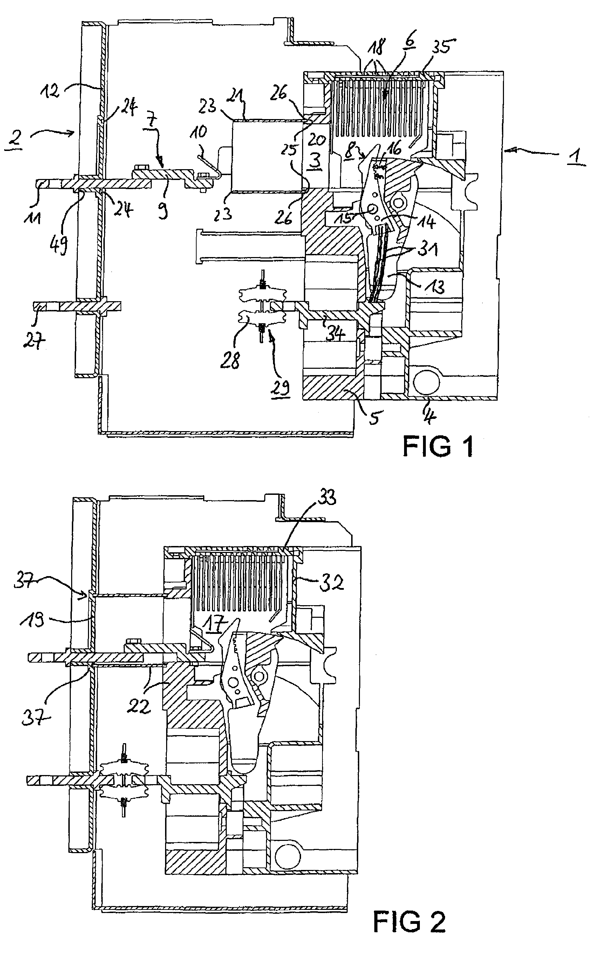

Die Anordnung gemäß der Figur 1 weist einen Einschub-Leistungsschalter 1, einen Einschubrahmen 2 und drei Schaltpole 3 auf. Dabei ist der Einschub-Leistungsschalter 1 nur teilweise, insbesondere ohne Bedienpult und ohne die an sich bekannten von dem Bedienpult überdeckten Schalterteile (Antriebsmechanismus, Schaltschloss etc.) dargestellt. Zu sehen ist neben einer ersten und einer zweiten jeweils aus Kunststoff bestehenden Gehäuseschale 4 und 5 eine Lichtbogen-Löscheinrichtung 6 des Einschub-Leistungsschalters. Die Schaltpole 3 weisen einen feststehenden Schaltkontakt 7 und einen beweglichen Schaltkontakt 8 auf, von denen der feststehende Schaltkontakt 7 ortsfest zu dem Einschubrahmen 2 und der bewegliche Schaltkontakt 8 als Teil des Einschub-Leistungsschalters 1 ortsfest zwischen den beiden Gehäuseschalen 4 und 5 gehalten ist.

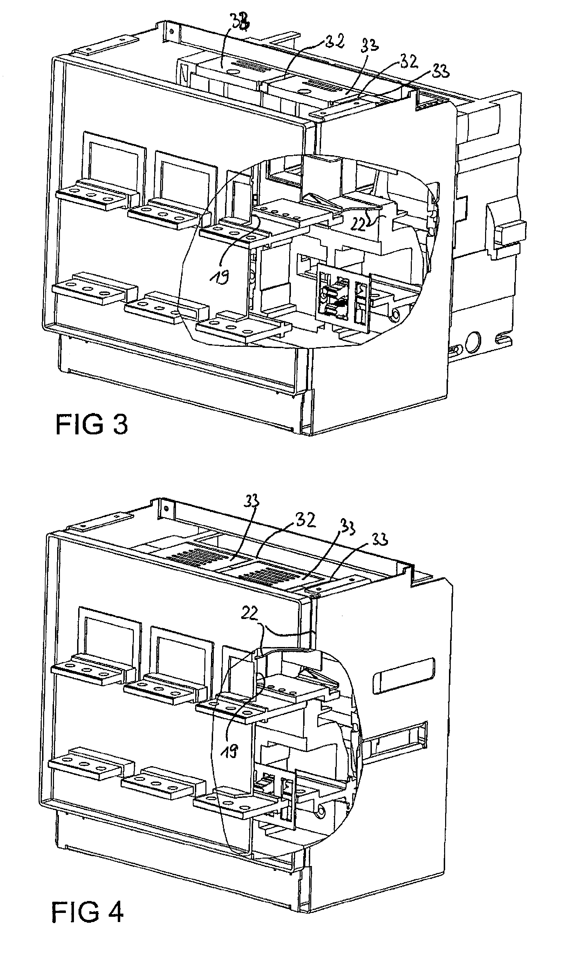

Jeder der feststehenden Schaltkontakte 7, besteht aus einem als Profilteil ausgebildeten Kontaktelement 9 das ein Lichtbogenhorn 10 trägt. Die Stirnseite der Kontaktelemente kann derart gestaltet sein, dass ein erster Bereich einen Hauptkontakt, ein zweiter Bereich einen Zwischenkontakt und ein dritter Bereich einen Abreißkontakt bildet. Sie kann in üblicher Weise mit Kontaktauflagen versehen werden. Jeder der feststehenden Schaltkontakte 7 ist über Schraubverbindungen jeweils an einer oberen Anschlussschiene 11 befestigt, die eine als Rückwand ausgebildete erste Wand 12 des Einschubrahmens 2 durchgreift. - Zur ortsfesten Fixierung jedes feststehenden Schaltkontaktes zu dem Einschubrahmen dient jeweils eine Anschlagfläche 49 der oberen Anschlussschiene 11, die an der ersten Wand 12 des Einschubrahmens anliegt (vgl. auch Figuren 3 und 4).

Jeder der beweglichen Schaltkontakte 8 besteht aus einem schwenkbaren Kontaktträger 13, an dem mehrere Kontakthebel 14 mittels eines Lagerbolzens 15 schwenkbar gehalten und über Kontaktkraftfedern 16 abgestützt sind.

Zur Aufnahme der drei Schaltpole 3 ist ein Gehäuse vorgesehen. Das Gehäuse ist in drei Schaltkammern 17 unterteilt, die abgesehen von speziell ausgebildeten Austrittsöffnungen 18 der das Gehäuse nach oben abschließenden Lichtbogen-Löscheinrichtung 6 im wesentlichen gasdicht von dem Gehäuse umschlossen sind. Jede der drei Schaltkammern 17 nimmt jeweils einen der drei Schaltpole 3 auf.

Jeweils ein zum Umschließen der Schaltkammer 17 dienender erster Wandabschnitt 19 des Gehäuses ist von der ersten Wand 12 des Einschubrahmens 2 gebildet (vgl. auch Figuren 2, 3 und 4).

Die zweite Gehäuseschale 5 des Einschub-Leistungsschalters 1 weist eine dem ersten Wandabschnitt 19 gegenüberliegende Öffnung 20 und einen hohlkörperartigen Schild 21 auf und bildet jeweils einen zweiten Wandabschnitt 22. Die Öffnung 20 ist so dimensioniert und angeordnet, dass sie von dem feststehenden Schaltkontakt 7 und insbesondere von seinem Lichtbogenhorn 10 durchsetzbar ist. Zum Abdichten der Schaltkammern 17 dienen Labyrinthe 37. Hierzu taucht die stirnseitig umlaufende erste Kante 23 jedes Schildes 21 jeweils in eine erste Nut 24 der ersten Wand 12 des Einschubrahmens. Da die Schilde 21 als separate Teile ausgebildet sind, taucht zusätzlich die stirnseitig umlaufende zweite Kante 25 jedes Schildes jeweils in eine zweite Nut 26 der zweiten Gehäuseschale 5 des Einschub-Leistungsschalters ein (vgl. Figur 2). - Um auf das zweite Labyrinth zum Abdichten der Schaltkammern an der Fuge zwischen den Schilden und der zweiten Gehäuseschale verzichten zu können, können die Schilde auch als integraler Bestandteil der zweiten Gehäuseschale des Einschub-Leistungsschalters ausgebildet sein.

Zur Erhöhung der Stromtragfähigkeit kann weiterhin vorgesehen sein, dass jede der Schaltkammern auch zwei oder mehr Schaltkontaktanordnungen aufnimmt. In diesem Fall kann der zweite Wandabschnitt eine einzige, von allen feststehenden Schaltkontakten gemeinsam durchsetzbare Öffnung oder aber mehrere, jeweils von einem oder mehreren der feststehenden Schaltkontakte durchsetzbare Öffnungen aufweisen. Bei mehreren Öffnungen kann der Austritt ionisierter Gase aus der Schaltkammer dadurch noch sicherer verhindert werden, dass ein einziges, alle Öffnungen umlaufendes Labyrinth oder dass mehrere jeweils zumindest eine der Öffnungen umlaufende Labyrinthe vorgesehen sind.

Zum stromtragenden Anschluss des beweglichen Schaltkontaktes 8 weist der Einschubrahmen 1 eine untere Anschlussschiene 27 auf, die ebenfalls die erste Wand 12 des Einschubrahmens 2 durchgreift. Das dem Einschub-Leistungsschalter 1 zugewandte Ende dieser unteren Anschlussschiene 27 greift beim Einschieben des Einschub-Leistungsschalters in eine mit Kontaktlamellen 28 versehenen Trennkontaktanordnung 29 ein. Diese Trennkontaktanordnung 29 ist an einem als Profilteil ausgebildeten Anschlussstück 34 unter Federkraft tragend gehalten. Das Anschlussstück 34 ist über biegsame Leiter 31 mit den Kontakthebeln 14 stromtragend verbunden.

Gemäß der Figuren 2, 3 und 4 dient bei der ersten Ausführungsform der neuen Anordnung zur Bildung jeder der Schaltkammern 17 neben dem ersten und dem zweiten Wandabschnitt 19 und 22 jeweils noch ein dritter und ein vierter Wandabschnitt 32 und 33. Der dritte Wandabschnitt 32 ist von der ersten Gehäuseschale 4 des Einschub-Leistungsschalters und der vierte Wandabschnitt 33 von einem mit den Austrittsöffnungen 18 versehenen Deckel 35 der Lichtbogen-Löscheinrichtung 6 gebildet. Jede der Schaltkammern ist durch die jeweils vier Wandabschnitte des Gehäuses umschlossen, sobald der Einschub-Leistungsschalter vollständig in den Einschubrahmen eingeschoben ist.

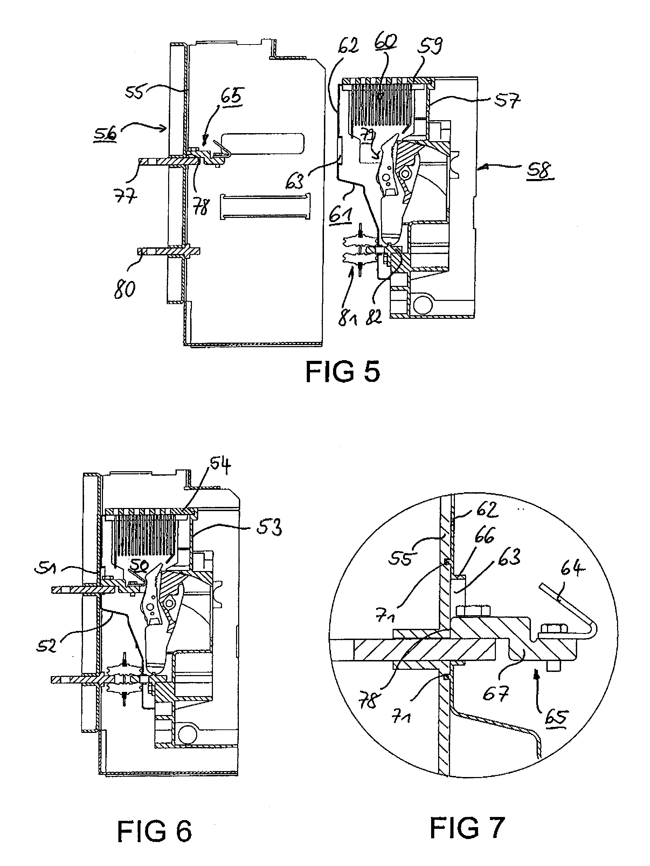

Gemäß der Figuren 5 und 6 dienen bei der zweiten Ausführungsform der neuen Anordnung zum Umschließen jeder Schaltkammern 50 ebenfalls jeweils vier Wandabschnitte 51, 52, 53 und 54, die von dem Gehäuse gebildet sind. Wie schon bei der ersten Ausführungsform ist der erste Wandabschnitt 51 von der ersten Wand 55 des Einschubrahmens 56, der dritte Wandabschnitt 53 von der ersten Gehäuseschale 57 des Einschub-Leistungsschalters 58 und der vierte Wandabschnitt 54 von dem Deckel 59 der Lichtbogen-Löscheinrichtung 60 gebildet. Im Gegensatz zu der ersten Ausführungsform ist der zweite Wandabschnitt 52 jeder der Schaltkammern jedoch von jeweils einer Abdeckung 61 gebildet.

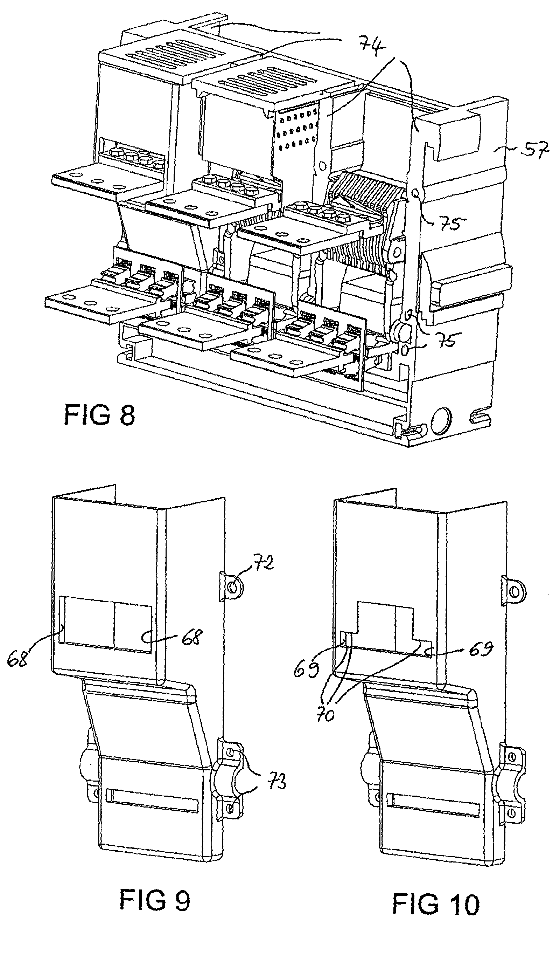

Die Abdeckung 61 weist einen Abschnitt mit U-förmigen Querschnitt auf, wobei eine Basisfläche 62 mit einer fensterartigen Öffnung 63 versehen ist. Diese fensterartige Öffnung 63 ist gemäß der Figur 7 von dem mit dem Lichtbogenhorn 64 versehenen feststehenden Schaltkontakt 65 durchsetzbar. Dabei bildet der die Öffnung 63 bildende Rand 66 Führungsflächen für das als Profilteil ausgebildete Kontaktelement 67 des feststehenden Schaltkontaktes. Gemäß der Figur 9 können Führungsflächen 68 zur horizontalen und gemäß der Figur 10 Führungsflächen 69 zur horizontalen und Führungsflächen 70 zur vertikalen Führung des feststehenden Schaltkontaktes 65 durch den Rand gebildet sein.

Gemäß der Figur 7 kann jeweils zwischen der Basisfläche 62 der Abdeckung und der ersten Wand 55 des Gehäuses ein die Öffnung umlaufendes Labyrinth 71 zum Abdichten der Schaltkammer 50 gebildet sein.

Gemäß der Figuren 9 und 10 weisen die Abdeckungen 61 seitliche Ösen 72, 73 auf, über die sie mittels nicht dargestellter Befestigungselementen an Zwischenwänden 74 der ersten Gehäuseschale 57 des Einschub-Leistungsschalters befestigbar sind. Hierzu greifen die Befestigungselemente in Öffnungen 75 der Zwischenwände 74 ein.

Der feststehende Schaltkontakt 65 ist bei der zweiten Ausführungsform der neuen Anordnung ebenfalls an einer oberen Anschlussschiene 77 des Einschubrahmens 56 befestigt. Dabei bildet die vom Einschub-Leistungsschalter abgewandte Stirnseite des als Profilteil ausgebildeten und mit dem Lichtbogenhorn versehenen feststehenden Schaltkontaktes eine Anschlagfläche 78 zur ortsfesten Fixierung des festsehenden Schaltkontaktes an dem Einschubrahmen.

Zum stromtragenden Verbinden des beweglichen Schaltkontaktes 79 mit der unteren Anschlussschiene 80 des Einschubrahmens dient wie bei der ersten Ausführungsform eine Trennkontaktanordnung 81 und ein Anschlussstück 82, wobei auch hier zur Einsparung von Bauraum in Verschiebungsrichtung des Einschub-Leistungsschalters kein Versatz der unteren Trennkontaktanordnung 81 gegenüber dem feststehenden Schaltkontakt 65 vorgesehen ist. Damit erstrecken sich auch hier die Trennkontaktanordnung 81 und der feststehende Schaltkontakt 65 im wesentlichen im gleichen Abstand von der ersten Wand 55 des Einschubrahmens.

## Patentansprüche

1. Anordnung mit einem Einschubrahmen (2; 56) und einem in den Einschubrahmen schiebbaren Einschub-Leistungsschalter (1; 58),
- bei der zumindest eine aus einem feststehenden (7; 65) und einem beweglichen (8; 79) Schaltkontakt bestehende Schaltkontaktanordnung vorgesehen ist,
- wobei der feststehende Schaltkontakt (7; 65) stets ortsfest zu dem Einschubrahmen (1; 56) fixiert ist.

2. Anordnung nach Anspruch 1,
**dadurch gekennzeichnet, dass**
der feststehende Schaltkontakt (7; 65) an einer ersten Anschlussschiene (11; 77) gehalten ist, die eine erste Wand (12; 55) des Einschubrahmens (2; 56) durchgreift.

3. Anordnung Anspruch 2,
**dadurch gekennzeichnet, dass**
eine die erste Wand (12; 55) des Einschubrahmens durchgreifende zweite Anschlussschiene (28; 80) mittels einer Trennkontaktanordnung (29; 81) mit dem beweglichen Schaltkontakt (8; 79) stromtragend verbunden ist,
wobei sich die Trennkontaktanordnung (29; 81) und der feststehende Schaltkontakt (7; 65) im wesentlichen im gleichen Abstand von der ersten Wand (12; 55) erstrecken.

4. Anordnung nach einem der Ansprüche 1 bis 3,
**dadurch gekennzeichnet, dass**
ein Schaltkammern (17; 50) bildendes Gehäuse vorgesehen ist, wobei jede der Schaltkammern zur Aufnahme jeweils eines Schaltpoles (3; 30) dient.

5. Anordnung nach Anspruch 4,
**dadurch gekennzeichnet, dass** jeweils ein zur Bildung einer der Schaltkammern (17; 50) dienender erster Wandabschnitt (19; 51) des Gehäuses von der ersten Wand (12; 55) des Einschubrahmens (2; 56) gebildet ist.

6. Anordnung nach einem der Ansprüche 4 oder 5,
**dadurch gekennzeichnet, dass** jeweils ein zur Bildung einer der Schaltkammern (17; 50) dienender zweiter Wandabschnitt (22; 52) des Gehäuses von einer Gehäuseschale (5) oder einer Abdeckung (61) des Einschub-Leistungsschalters gebildet ist,
wobei der zweite Wandabschnitt (22; 52) in eingeschobenem Zustand des Einschub-Leistungsschalters an den ersten Wandabschnitt (19; 51) angrenzt und mit zumindest einer dem ersten Wandabschnitt gegenüberliegenden Öffnung (20; 63, 85) versehen ist, die von dem feststehenden Schaltkontakt (7; 65) der zumindest einen Schaltkontaktanordnung des Schaltpoles (3; 30) durchsetzbar ist.

7. Anordnung nach Anspruch 6,
**dadurch gekennzeichnet, dass**
ein die Öffnung (20; 63, 85) begrenzender Rand (35; 66, 86) Führungsflächen (36; 68, 69, 70) für den feststehenden Schaltkontakt (7; 65) aufweist.

8. Anordnung nach einem der Ansprüche 6 oder 7,
**dadurch gekennzeichnet, dass** jeweils zwischen den aneinander grenzenden Wandabschnitten (19, 22; 51, 52) einer Schaltkammer (17; 50) ein die zumindest eine Öffnung (20; 63, 85) umlaufendes Labyrinth (37; 71) zum Abdichten der Schaltkammer gebildet ist.
